# EUROPEAN PATENT APPLICATION

(11) **EP 4 600 106 A1**
(43) Date of publication of application: **13.08.2025**
(21) Application number: 24223583.6
(22) Date of filing: 29.12.2024
(51) Int. Cl.: B60W 60/00, G05D 1/227, B60W 30/18

(54) **DRIVING CONTROL APPARATUS FOR VEHICLE**

(30) Priority: 06.02.2024 JP 2024016467
(71) Applicant: Suzuki Motor Corporation, Shizuoka 432-8611 (JP)
(72) Inventor: SATO, Katsuhiko, Hamamatsu-shi, 432-8611 (JP)
(74) Representative: Plasseraud IP

(57) **Abstract**

[Problem to be Solved]

To reduce the risk of disruption of traffic flow and contact and collision with other traffic participants in a traffic circle during operation of a risk mitigation function.

[Solution]

A driving control apparatus for a vehicle 1 including an autonomous operation device 10 for executing automated travel by remote monitoring and remote operation has a risk mitigation function (RMF) to execute risk mitigation control to stop the vehicle 1 at a target stopping position S in a situation in which continuation of automated travel by remote monitoring and remote operation has become difficult, and the autonomous operation device 10 is configured to execute search for target stopping position candidates T based on position information of the vehicle 1 and map information in preparation for activation of the RMF during the automated travel, set a plurality of target stopping position candidates T including a target stopping position candidate T on a path different from a target path of the automated travel, a target stopping position candidate T being set outside a traffic circle RA when the traffic circle RA exists on the target path, and select a target stopping position S from among the plurality of target stopping position candidates T in a case in which the RMF is activated in the vicinity of or inside the traffic circle RA.

## Description

### [Technical Field]

The present invention relates to a driving control apparatus for a vehicle, and more specifically relates to a risk mitigation function of a vehicle during automated travel by remote monitoring and remote operation.

### [Background Art]

Technologies of performing driverless vehicle driving with an autonomous operation device of remote monitoring and remote operation under specific conditions are being developed. A remote automated driving system has a configuration in which vehicle travel by an autonomous operation device including, for example, an adaptive cruise control system (ACCS), a continuous automated steering system or the like is monitored at a remote operation base station and vehicle operation is controlled as necessary. With such a remote automated driving system, in a situation in which continuation of automated travel by remote monitoring and remote operation has become difficult for some reason during vehicle travel by the autonomous operation device, a risk mitigation function (RMF) of the autonomous operation device mounted on the vehicle needs to be executed.

For example, Patent Literature 1 discloses that when an anomaly has occurred to a vehicle during automated driving, a pull-off space is searched for, a guide path to the pull-off space is calculated, and the vehicle is controlled to travel along the guide path by automated steering. The pull-off space is set to a space in which a vehicle can be parked, such as vacant lots or parking lots of commercial facilities.

### [Citation List]

### [Patent Literature]

[Patent Literature 1] JP 2019-152963 A

### [Summary of Invention]

### [Problem to be Solved by the Invention]

A traffic circle (or roundabout) is well-known as a type of intersection installed on a road. The traffic circle connects a plurality of roads through a circular space so that vehicles circulate in one direction on a circulatory roadway around a central island at the center of the circular space. Typically, no stop signs nor traffic lights are installed on the circulatory roadway of the traffic circle. In this manner, the traffic circle has a form different from that of a typical intersection, and thus it is desired that when the risk mitigation function is activated in the vicinity of or inside the traffic circle, the vehicle is safely guided to a pull-off space when the risk mitigation function is activated so that disruption of traffic flow and contact and collision with other traffic participants are avoided inside or in the vicinity of the traffic circle.

The present invention is made in view of the actual situation as described above and is intended to reduce the risk of disruption of traffic flow or contact and collision with other traffic participants during operation of a risk mitigation function in the vicinity of or inside a traffic circle.

### [Means for Solving the Problem]

According to an aspect of the present invention, a driving control apparatus for a vehicle including an autonomous operation device for executing automated travel by remote monitoring and remote operation has a risk mitigation function (RMF) to execute risk mitigation control to stop the vehicle at a target stopping position in a situation in which continuation of automated travel by remote monitoring and remote operation has become difficult, and the autonomous operation device is configured to execute search for target stopping position candidates based on position information of the vehicle and map information in preparation for activation of the RMF during the automated travel, set a plurality of target stopping position candidates including a target stopping position candidate on a path different from a target path of the automated travel, in a case in which the traffic circle exists on a target path, a target stopping position candidate being set outside the traffic circle, and select a target stopping position from among the plurality of target stopping position candidates in a case in which the RMF is activated in a vicinity of or inside a traffic circle.

### [Advantageous Effect of Invention]

A driving control apparatus for a vehicle according to the present invention can reduce the risk of disruption of traffic flow or contact and collision with other traffic participants during operation of a risk mitigation function in the vicinity of or inside a traffic circle.

### [Brief Description of Drawings]

[Figure 1] Figure 1 is a schematic view illustrating a driving control apparatus for a vehicle according to one embodiment of the present invention.
[Figure 2] Figure 2 is a schematic plan view illustrating an external sensor group of the vehicle.
[Figure 3] Figure 3 is a block diagram illustrating the driving control apparatus for the vehicle.
[Figure 4] Figure 4 is a diagram illustrating a plurality of target stopping position candidates set in preparation for activation of an RMF in the vicinity of or inside a traffic circle.
[Figure 5] Figure 5 is a table indicating an example of the priority ranks of a plurality of target stopping position candidates.
[Figure 6] Figure 6 is a flowchart for explaining the process of the RMF activation.

### [Modes for Carrying Out the Invention]

An embodiment of the present invention will be described below in detail with reference to the accompanying drawings. A driving control apparatus for a vehicle 1 according to the present embodiment is configured to be able to execute SAE (Society of Automotive Engineers) Level 4 equivalent automated driving that performs all driving operations in an operational design domain (ODD). Moreover, the driving control apparatus for the vehicle 1 is a remote automated driving system capable of performing automated travel by remote monitoring and remote operation, and the vehicle 1 is assumed to be a service car, such as a taxi or rental car, that provides a driverless automated driving mobility service. Note that the present embodiment is applicable not only to driverless automated travel vehicles but also to automated travel vehicles with drivers.

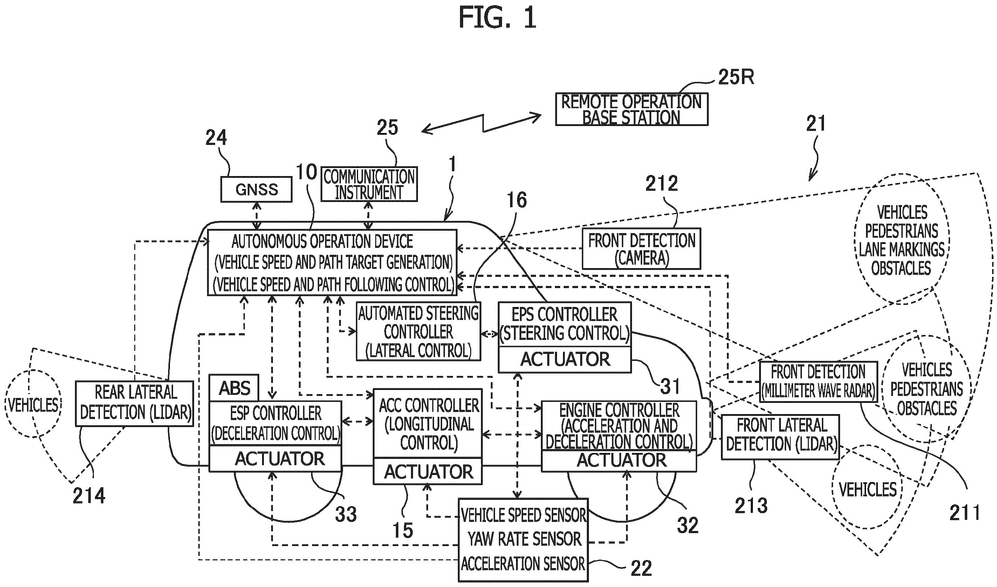

In Figures 1 to 3, the vehicle 1 provided with the driving control apparatus according to the present embodiment includes, in order to perform, on the vehicle side, recognition, determination, and operation that have been conventionally performed by a driver, external sensors 21 that sense a vehicle surrounding environment, internal sensors 22 that sense vehicle information, a map information database 23, a positioning means 24, a controller/actuator group for speed control and steering control, an ACC controller 15 for inter-vehicular distance control, an automated steering controller 16 for automated steering control, and an autonomous operation device 10 for executing path tracking control by collectively controlling these components, in addition to typical automobile constituent components such as an engine and a vehicle body. The vehicle 1 further includes a communication instrument 25 for communicating remote operation commands, vehicle information, own-vehicle position information, and the like with a remote operation base station 25R.

The controller/actuator group for speed control and steering control includes an electric power steering (EPS) controller 31 for steering control, an engine controller 32 for acceleration/deceleration control, and an ESP/ABS controller 33. An ESP (registered trademark; electronic stability program) constitutes a stability control system (vehicle behavior stabilization control system) including an ABS (anti-lock braking system).

The external sensors 21 includes a plurality of sensing means for inputting, to the autonomous operation device 10, external data such as image data and point cloud data including lane markings on a road that define the vehicle's lane and adjacent lanes, existence and relative distances of other vehicles, obstacles, persons, and the like around the vehicle.

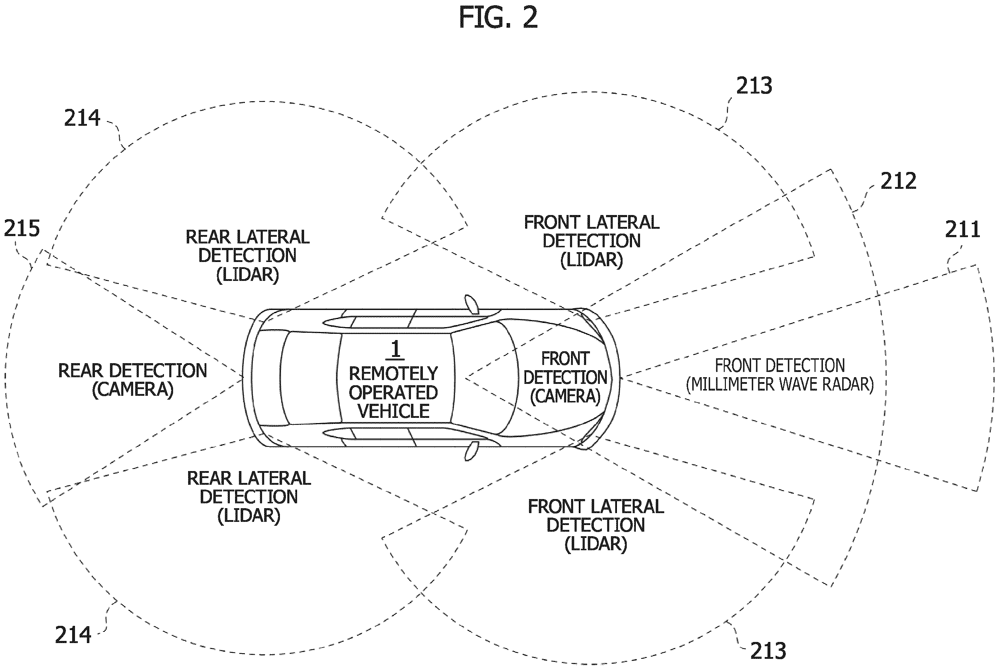

For example, as illustrated in Figure 2, the vehicle 1 includes a millimeter wave radar (211) and a camera (212) as front detection means 211 and 212, LIDARs (laser imaging, detection, and ranging) as front lateral detection means 213 and rear lateral detection means 214, and a camera (back camera) as a rear detection means 215. The external sensors 21 cover 360° around the vehicle and can sense the positions and distances of other vehicles, obstacles, and the like within predetermined ranges in the front, rear, right, and left directions of the vehicle, and the lane marking positions of the vehicle's lane and adjacent lanes. Note that a millimeter wave radar (or LIDAR) may be added as a rear detection means.

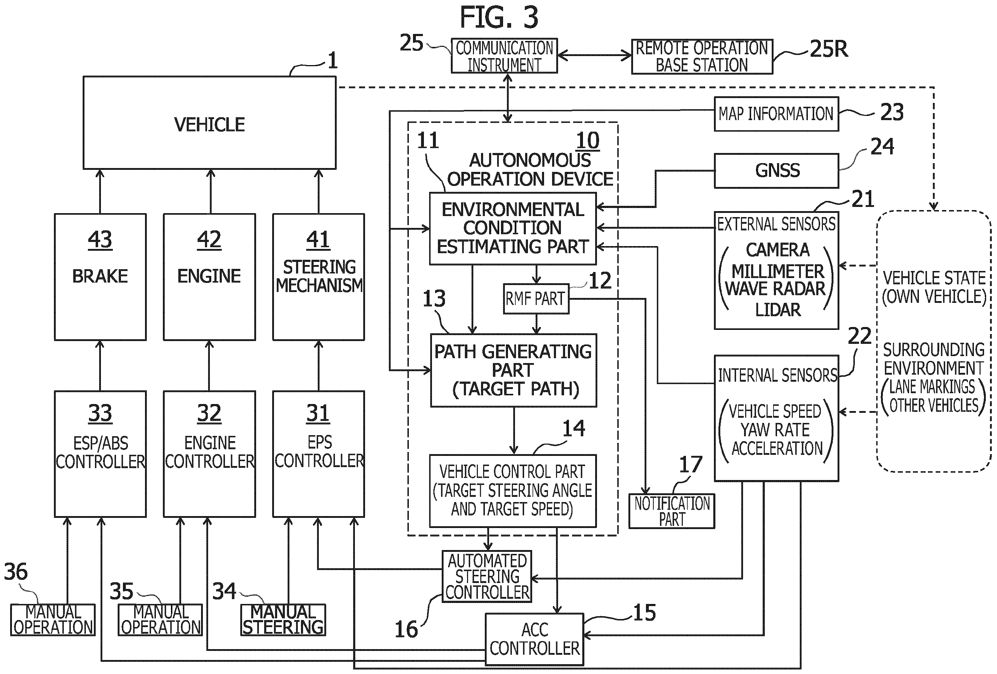

The internal sensors 22 includes a plurality of sensing means such as a vehicle speed sensor, a yaw rate sensor, and an acceleration sensor, which measure physical quantities indicating the motion state of the vehicle. As illustrated in Figure 3, measurement values of the internal sensors 22 are input to the autonomous operation device 10, to the ACC controller 15, to the automated steering controller 16, and to the EPS controller 31 and are subjected to arithmetic processing together with inputs from the external sensors 21.

The external sensors 21 and the internal sensors 22 are configured to start operating simultaneously with activation of the vehicle 1 and to constantly detect the surrounding environment and vehicle information.

The autonomous operation device 10 includes an environmental condition estimating part 11, a risk mitigation function (RMF) part 12, a path generating part 13, and a vehicle control part 14 and is configured as a computer for performing functions as described below, the computer including a ROM in which computer programs and data are stored, a CPU that performs arithmetic processing, a RAM onto which the computer programs and data are read and in which dynamic data and arithmetic processing results are stored, an input-output interface, and the like.

The environmental condition estimating part 11 acquires the absolute position of the vehicle by matching between own-vehicle position information obtained by the positioning means 24, such as the Global Navigation Satellite System (GNSS), and map information in the map information database 23. The environmental condition estimating part 11 estimates the lane marking positions of the vehicle's lane and adjacent lanes and the positions and speeds of other vehicle based on external data such as image data and point cloud data acquired by the external sensors 21. Note that instead of acquiring the absolute position of the vehicle 1 based on the own-vehicle position information obtained by the positioning means 24 and the map information in the map information database 23, the environmental condition estimating part 11 may be configured to estimate the current position of the vehicle by using Simultaneous Localization and Mapping (SLAM) or acquiring the relative position of the vehicle 1 relative to the lane markings of adjacent lanes obtained from the external sensors 21.

The environmental condition estimating part 11 is configured to be able to additionally acquire information related to a road shape, such as whether a traffic circle exists on a road and whether there is a pull-off space (or evacuation space) around the traffic circle in which the vehicle can be stopped, based on the map information in the map information database 23, for example. A traffic circle will be described later. In addition, the environmental condition estimating part 11 acquires the motion state of the vehicle 1 based on internal data measured by the internal sensors 22.

The RMF part 12 determines, based on information input from the environmental condition estimating part 11, whether to activate a risk mitigation function (RMF) to safely stop the vehicle 1 in a target stopping area in a case in which road conditions and environment conditions are outside the operational design domain (ODD) or in a case in which the system is not operating normally. In the present embodiment, the RMF is configured to be activated in a situation in which continuation of remote monitoring and remote operation of the driving control apparatus by the remote operation base station 25R through the communication instrument 25 has become difficult, in other words, in a case in which automated travel of the vehicle 1 by remote monitoring and remote operation has become difficult.

Before and during operation of the RMF, notification to the driver and passengers of the vehicle 1 and road users outside the vehicle is performed with a notification part 17. Moreover, in a case in which the path of the vehicle 1 is changed from a target path of automated travel due to activation of the RMF as described later, the change of the path (traveling direction) of the vehicle 1 may be notified by the notification part 17. Note that the notification part 17 may be configured to notify the inside and outside of the vehicle that automated travel by remote monitoring and remote operation has stopped. As means of the notification by the notification part 17, visual means such as lamp illumination or text display and/or auditory means such as voice output may be used.

The path generating part 13 is configured to generate a target path from the own-vehicle position estimated by the environmental condition estimating part 11 to a final destination. The path generating part 13 searches for a route from a starting point to a destination based on the own-vehicle position information and the map information and generates a rough target path, also referred to as a global path. The path generating part 13 also generates a detailed target path, also referred to as a local path, in automated travel such as lane-keeping travel, lane change, and traveling path change based on the lane marking positions of adjacent lanes, the positions and speeds of other vehicles, and the motion state of the vehicle, which are estimated by the environmental condition estimating part 11. The path generating part 13 is configured to additionally generate a target path to a target stopping position for RMF operation in a case in which the vehicle 1 is to be stopped by operation of the RMF.

The vehicle control part 14 calculates a target vehicle speed and a target steering angle based on a target path generated by the path generating part 13, transmits a speed command for constant speed traveling or inter-vehicular distance maintaining and following traveling to the ACC controller 15, and transmits a steering angle command for path following to the EPS controller 31 through the automated steering controller 16.

Note that the vehicle speed is also input to the EPS controller 31 and the ACC controller 15. Since steering reaction force changes with the vehicle speed, the EPS controller 31 refers to a map of steering angle and steering torque for each vehicle speed and transmits a torque command to a steering mechanism 41. Motion of the vehicle 1 in the longitudinal direction and the lateral direction is controlled as the engine controller 32, the ESP/ABS controller 33, and the EPS controller 31 control an engine 42, a brake 43, and the steering mechanism 41. Note that, for example, an electric motor may be used in place of or in addition to the engine 42 as a drive device of the vehicle 1.

### Overview of remote automated driving system

The following describes an overview of a remote automated driving system. An automated driving system in the present embodiment is an automated driving system of a remote monitoring and remote operation scheme, and travel of the vehicle 1 by the automated driving system is monitored by the remote operation base station 25R and is controlled from the remote operation base station 25R as necessary.

The automated driving system is a combined system of an adaptive cruise control system (ACCS) and a continuous automated steering system that continuously and automatically performs lane maintaining and lane change. The automated driving system can be executed in a state in which the ACC controller 15 constituting the adaptive cruise control system (ACCS) and the automated steering controller 16 constituting the continuous automated steering system are both operating together with the autonomous operation device 10.

An operator of the remote operation base station 25R sets a starting point and a destination before departure of the vehicle 1. The set starting point and destination are input to the autonomous operation device 10 of the vehicle 1 from the remote operation base station 25R through the communication instrument 25. The path generating part 13 generates a global path from the starting point to the destination based on the own-vehicle position information and the map information obtained from the environmental condition estimating part 11. The path generating part 13 generates a local path and a target vehicle speed based on the generated global path as well as external information (such as lanes, own-vehicle position, own-vehicle travel lane, the positions and speeds of other vehicles traveling in adjacent lanes, and existence of pedestrians and bicycles) acquired by the external sensors 21 and internal information (such as vehicle speed, yaw rate, and acceleration rate) acquired by the internal sensors 22.

When having determined that environment conditions and road conditions are maintained in the operational design domain (ODD) of the system, the operator of the remote operation base station 25R transmits a start command to the autonomous operation device 10 for the vehicle 1 to travel in accordance with the generated target path and target vehicle speed.

The vehicle control part 14 estimates the speed, posture, and lateral displacement of the vehicle 1 after Δt seconds based on the own-vehicle position and a motion characteristic of the vehicle 1, that is, the relation between a yaw rate γ and a lateral acceleration rate (d²y/dt²) that are generated by vehicle movement with a front wheel steering angle δ that occurs when a steering torque T is applied to the steering mechanism 41 during traveling at a vehicle speed V. The vehicle control part 14 provides a steering angle command with which the lateral displacement becomes equal to yt after Δt seconds to the EPS controller 31 through the automated steering controller 16, and provides a speed command with which the speed becomes equal to Vt after Δt seconds to the ACC controller 15.

The ACC controller 15, the automated steering controller 16, the EPS controller 31, the engine controller 32, and the ESP/ABS controller 33 operate independently of automated steering, but are also operable according to command inputs from the autonomous operation device 10 during operation of the automated driving system.

When having received a deceleration command from the ACC controller 15, the ESP/ABS controller 33 outputs a hydraulic command to an actuator and controls the vehicle speed by controlling braking force of the brake 43. When having received an acceleration/deceleration command from the ACC controller 15, the engine controller 32 provides a torque command to the engine 42 by controlling an actuator output (throttle opening degree) so as to control the vehicle speed by controlling driving force.

An ACC system (ACCS) functions with combination of hardware and software, such as the millimeter wave radar as the front detection means 211 constituting the external sensors 21, the ACC controller 15, the engine controller 32, and the ESP/ABS controller 33.

Specifically, in a case in which there is no preceding vehicle, the vehicle 1 travels at a constant speed with an ACC set speed (set speed) as a target vehicle speed. When having caught up to a preceding vehicle (in a case in which the speed of the preceding vehicle is equal to or slower than the ACC set speed), the vehicle 1 travels by following the preceding vehicle according to the speed of the preceding vehicle while maintaining an inter-vehicular distance (set inter-vehicular distance) in accordance with a set time gap (time headway = "inter-vehicular distance"/"own-vehicle speed").

The continuous automated steering system senses lane markings, the position of the own vehicle, and the positions and speeds of other vehicles traveling in adjacent lanes by the environmental condition estimating part 11 of the autonomous operation device 10 based on image data and point cloud data acquired by the external sensors 21 and vehicle information acquired by the internal sensors 22. Based on these pieces of information, the continuous automated steering system performs steering control by the EPS controller 31 through the automated steering controller 16 to execute lane maintaining control to travel along the center of a lane and lane change control across a lane marking.

That is, when having received the steering angle command from the automated steering controller 16, the EPS controller 31 refers to a map of vehicle speed, steering angle, and steering torque, and outputs a torque command to an actuator (EPS motor) so that the steering mechanism 41 provides a front wheel steering angle designated as a target.

As described above, the automated driving system is a system configured by combining longitudinal control (speed control and inter-vehicular distance control) by the ACC controller 15 and lateral control (lane maintaining control and lane change control) by the automated steering controller 16. The remote automated driving system monitors travel of the vehicle 1 by the remote operation base station 25R and controls travel of the vehicle 1 in accordance with a remote operation command from the remote operation base station 25R.

### Risk mitigation function (RMF) of automated driving system

During operation of the automated driving system, the environmental condition estimating part 11 constantly monitors whether the vehicle traveling state, surrounding environment conditions, and the like are maintained in the operational design domain (ODD) of the system based on external information acquired through the external sensors 21, vehicle information acquired by the internal sensors 22, communication conditions with the remote operation base station 25R, and the like. In a case of deviation from the ODD or in a case in which the system does not normally operate, it is requested to activate the RMF to safely stop the vehicle 1 in a target stopping area.

In a case in which remote monitoring and remote control of the vehicle 1 by the remote operation base station 25R have become difficult, such as when communication with the remote operation base station 25R is disconnected, or when the communication instrument 25 malfunctions, or the like, the RMF part 12 determines that the RMF needs to be activated based on a signal from the environmental condition estimating part 11 and activates the RMF to guide and stop the vehicle 1 in a target stopping area. Ordinarily, the target stopping area of the RMF is set to a space in which the vehicle 1 can be stopped on an automated travel target path.

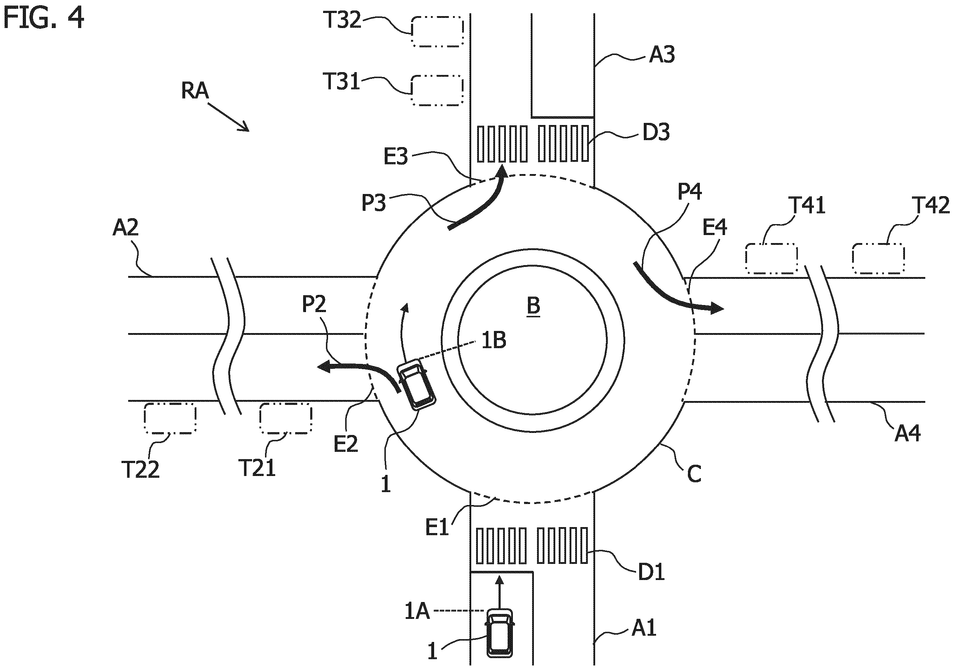

As a type of intersection, a traffic circle (or roundabout) is installed on a road in some cases. The traffic circle connects a plurality of roads through a circular space so that vehicles circulate in one direction on a circulatory roadway around a central island at the center of the circular space (refer to Figure 4). In the traffic circle, traffic in the circulatory roadway is prioritized. When no vehicles are traveling through the circulatory roadway, a vehicle intending to enter the traffic circle enters the circulatory roadway at a slow speed without stopping.

In a case in which the RMF is activated in the vicinity of an intersection, the vehicle 1 may cross another traffic participant in the intersection or may disturb traffic flow while the vehicle 1 is decelerated and is guided to a target stopping area. In particular, a traffic circle differs in form from conventional intersections such as crossroads and T-junctions, and thus in a case in which the RMF is activated in the vicinity of or inside a traffic circle, the vehicle 1 is desired to be safely guided to a target stopping area so that disruption of traffic flow and contact or collision with other traffic participants are avoided in the traffic circle.

Thus, in the present embodiment, in a case in which the RMF is activated in the vicinity of or inside a traffic circle, an RMF target stopping position is set in an area in which the risk of contact or collision of the vehicle 1 with other traffic participants, for example, can be reduced and influence on traffic flow of other traffic participants can be reduced.

A case in which the RMF is activated in the vicinity of a traffic circle means, for example, a situation in which the vehicle 1 is stopped inside of or near the traffic circle when decelerated to stop by operation of the RMF, and as a result, the risk of disruption of traffic flow and contact and collision with other traffic participants in the traffic circle occurs. Similarly to a typical intersection, the inside of a traffic circle and a predetermined region around the traffic circle are set as a no-parking and no-stopping zone for vehicles. Thus, for example, in a stage in which (place in which or time at which) the vehicle 1 cannot be stopped just before the no-parking and no-stopping zone of the traffic circle despite deceleration at a predetermined deceleration rate by operation of the RMF, it is determined that the RMF is activated in the vicinity of the traffic circle.

In other words, a predetermined region just before a closest traffic circle in which the vehicle 1 stops in its no-parking and no-stopping zone when decelerated at a predetermined deceleration rate (for example, 4.0 m/s²) by operation of the RMF may be defined as the vicinity of the traffic circle. Note that, in a case in which the no-parking and no-stopping zone is not set at a traffic circle, a predetermined region just before a closest traffic circle in which the vehicle 1 stops in the traffic circle when decelerated at a predetermined deceleration rate by operation of the RMF may be defined as the vicinity of the traffic circle. The outside of the circulatory roadway (refer to Figure 4) of a traffic circle, or, in a case in which a no-parking and no-stopping zone is provided at a traffic circle, the outside of the no-parking and no-stopping zone may be defined as the outside of the traffic circle.

### Setting of RMF target stopping position

The autonomous operation device 10 is configured to acquire the own-vehicle position through matching performed by the environmental condition estimating part 11 between the own-vehicle position information obtained by the positioning means 24 and the map information in the map information database 23 and to always search for, by the RMF part 12, a plurality of target stopping position candidates in preparation for activation of the RMF based on the own-vehicle position and the map information of surroundings during automated travel. When the RMF is operated, a target stopping position is selected from among the plurality of target stopping position candidates, and the vehicle 1 is guided and stopped at the selected target stopping position. The following describes setting of the RMF target stopping position in a case in which the RMF is activated in the vicinity of or inside a traffic circle.

### (1) Setting of target stopping position candidates

The RMF part 12 is configured to acquire, in a case in which a traffic circle is on a target path, information such as the shape of the traffic circle, the number of roads connected to the traffic circle, and a space available for stopping around the traffic circle based on for example, road information obtained from the map information database 23.

Figure 4 illustrates an exemplary traffic circle RA in a case of left-side driving rules. The traffic circle RA illustrated in Figure 4 has a configuration in which four roads A1 to A4 are connected and vehicles travel clockwise through a circulatory roadway C around a central island B. Pedestrian crosswalks D1 and D3 are installed on the roads A1 and A3, respectively. Note that, in a case of right-side driving rules, vehicles travel anticlockwise through the circulatory roadway C of the traffic circle RA. The following description will be made with an example of left-side driving.

The vehicle 1 is positioned on the road A1 just before an entrance E1 of the traffic circle RA. In the example illustrated in Figure 4, the path generating part 13 sets an automated travel target path to be, for example, a path that makes a half-turn around the traffic circle RA and enters the road A3 from an exit E3 as illustrated with an arrow P3.

The RMF part 12 sets a target stopping position candidate outside the traffic circle RA in a case in which the traffic circle RA exists on the automated travel target path. As a target stopping position candidate for RMF, a plurality of target stopping position candidates may be set including areas on a path different from the global path (target path) set by the path generating part 13. Specifically, a plurality of target stopping position candidates are set on a plurality of roads extending from the exits of the traffic circle RA.

Based on, for example, map information obtained from the map information database 23, the RMF part 12 searches for spaces available for stopping on roads A2 to A4 connected to and extending from exits E2 to E4 of the traffic circle RA and sets target stopping position candidates. Specifically, the RMF part 12 sets target stopping position candidates outside the exits E2 to E4 of the traffic circle RA such that a target stopping position S is positioned outside the traffic circle RA. Note that, although not illustrated in Figure 4, target stopping position candidates may be set on the road A1 because the vehicle 1 can make a full turn around the traffic circle RA and come back to the road A1 where the vehicle 1 is positioned.

A target stopping position candidate may be set to, for example, a road shoulder of a road in which the vehicle 1 travels, an alley connecting with a road in which the vehicle 1 travels, or a parking space facing a road in which the vehicle 1 travels. In a case in which a target stopping position candidate is set to a road shoulder, it is desirable to ensure a region with which the vehicle 1 having stopped does not extend onto a lane. In a case in which a target stopping position candidate is set to an alley or a parking space, it is desirable that the vehicle 1 can move to the target stopping position without crossing the oncoming lane.

In the example illustrated in Figure 4, the RMF part 12 sets two target stopping position candidates T21 and T22 on the road A2 extending from the exit E2 of the traffic circle RA. In addition, two target stopping position candidates T31 and T32 are set on the road A3 extending from the exit E3 of the traffic circle RA, and two target stopping position candidates T41 and T42 are set on the road A4 extending from the exit E4 of the traffic circle RA. The target stopping position candidates T21 and T22 set on the road A2 and the target stopping position candidates T41 and T42 set on the road A4 are positioned on paths different from the automated travel target path. Hereinafter, the target stopping position candidates T21, T22, T31, T32, T41, and T42 may also be collectively referred to as target stopping position candidates T.

### (2) Selection of target stopping position

The RMF part 12 is configured to set a priority rank to each of the plurality of target stopping position candidates T set as described above and to select a target stopping position candidate T with the highest priority rank as the target stopping position S from among the plurality of target stopping position candidates T. A priority rank setting method will be first described below.

The priority ranks of the target stopping position candidates T are basically set such that a target stopping position candidate T, with which the risk of disruption of traffic flow or contact and collision with other traffic participants in the traffic circle RA can be reduced, is likely to be selected as the target stopping position S in a case in which the RMF is activated in the vicinity of or inside the traffic circle RA. In other words, the priority ranks of the target stopping position candidates T are set to be higher as the risk of contact and collision with other traffic participants is lower when the vehicle 1 is guided to be stopped during RMF operation.

Thus, the RMF part 12 sets a priority rank to each target stopping position candidate T based on various kinds of conditions, such as a distance that the vehicle 1 travels before reaching the target stopping position S during RMF operation, existence of a pedestrian crosswalk installed just beyond an exit of the traffic circle RA, and a lateral acceleration rate applied to the vehicle 1 when leaving an exit of the traffic circle RA. Moreover, the RMF part 12 changes methods of setting priority ranks for selecting the target stopping position S depending on the own-vehicle position of the vehicle 1 when the RMF is activated. Specifically, the priority ranks are set differently between a case in which the RMF is activated when the vehicle 1 is in the vicinity of the traffic circle RA, and a case in which the RMF is activated when the vehicle 1 is in the traffic circle RA.

### A: Case in which the RMF is activated in the vicinity of the traffic circle RA

In a case in which the current position of the vehicle 1 is, for example, a position 1A in Figure 4 and the RMF is activated in the vicinity of the traffic circle RA, in other words, in a case in which the RMF is activated before the vehicle 1 enters the traffic circle RA, priority ranks are determined, taking into consideration three conditions below.
(a1) Travel distance from an exit of the traffic circle RA to a target stopping position candidate T
(a2) Existence of a pedestrian crosswalk installed on a road extending from an exit of the traffic circle RA
(a3) Travel distance along the circulatory roadway C from an entrance to an exit of the traffic circle RA

As for condition (a1), a high priority rank is set because it is thought that the risk of contact and collision with other traffic participants such as other vehicles is lower as the travel distance from the exit of the traffic circle RA to the target stopping position candidate T is shorter. As for condition (a2), the priority rank of a target stopping position candidate T, which is set on a road with no pedestrian crosswalk installed just beyond an exit of the traffic circle RA, is high. In a case in which a pedestrian crosswalk is installed, pedestrians or the like may be crossing the pedestrian crosswalk and the vehicle 1 may contact pedestrians or the like when crossing the pedestrian crosswalk. Thus, the priority rank of a target stopping position candidate T, which is set on a road at which no pedestrian crosswalk is installed, is set to be higher than the priority rank of a target stopping position candidate T, which is set on a road at which a pedestrian crosswalk is installed.

As for condition (a3), since it is thought that the risk of contact and collision with other traffic participants such as other vehicles is lower as the travel distance on the circulatory roadway C from an entrance to an exit of the traffic circle RA is shorter, the priority rank of a target stopping position candidate T, which is set on a road extending from the exit with a shorter distance from the entrance is set to be high. Moreover, among the above-described three conditions, condition (a1) is most preferentially considered (highest priority for priority rank determination), condition (a2) is subsequently preferentially considered, and condition (a3) is lastly considered (lowest priority for priority rank determination) ((a1) > (a2) > (a3)).

### B: Case in which the RMF is activated in the traffic circle RA

In a case in which the current position of the vehicle 1 is, for example, a position 1B in Figure 4 and the RMF is activated in the traffic circle RA, in other words, in a case in which the RMF is activated after the vehicle 1 enters the traffic circle RA, priority ranks are determined, taking into consideration three conditions below.
(b1) Travel distance from an exit of the traffic circle RA to a target stopping position candidate T
(b2) Existence of a pedestrian crosswalk installed on a road extending from an exit of the traffic circle RA
(b3) Travel distance on the circulatory roadway C to an exit from which the vehicle 1 can exit the traffic circle RA at a predetermined lateral acceleration rate or lower

As for condition (b1), similarly to condition (a1), the priority rank is higher as the travel distance from the exit of the traffic circle RA to the target stopping position candidate T is shorter. As for condition (b2), similarly to condition (a2), the priority rank of a target stopping position candidate T, which is set on a road at which no pedestrian crosswalk is installed just beyond the exit of the traffic circle RA, is high.

As for condition (b3), among a plurality of exits through which the vehicle 1 can pass at a lateral acceleration rate applied to the vehicle 1 in a predetermined range when the vehicle 1 exits the traffic circle RA, the priority rank of a target stopping position candidate T is set to be higher, which is set just beyond an exit with a shorter travel distance from the own-vehicle position on the circulatory roadway C in the traffic circle RA to the exit is shorter. Moreover, among the above-described three conditions, condition (b1) is most preferentially considered (highest priority for priority rank determination), condition (b2) is subsequently preferentially considered, and condition (b3) is lastly considered (lowest priority for priority rank determination) ((b1) > (b2) > (b3)).

Condition (b3) is employed so that the vehicle 1 can travel without sudden steering when being guided to the target stopping position S. The predetermined lateral acceleration rate is, for example, a value approximately equal to a lateral acceleration rate allowed to be applied to the vehicle 1 during autonomous operation along a target path. When the vehicle 1 performs automated travel along a target path, the path generating part 13 of the autonomous operation device 10 calculates a target vehicle speed of the vehicle 1 with which the allowable lateral acceleration rate is not exceeded so that a mental or physical burden on the passengers is reduced even when, for example, the vehicle 1 turns right or left. Thus, even in a case in which the vehicle 1 is guided to the target stopping position S after exiting the traffic circle RA during RMF operation, it is preferable to control the behavior of the vehicle 1 so that a predetermined lateral acceleration rate (for example, 0.1 G approximately) approximately equal to an allowable lateral acceleration rate used during normal automated travel is not exceeded.

For this purpose, the RMF part 12 determines whether the vehicle 1 can turn to pass through an exit of the traffic circle RA at the predetermined lateral acceleration rate or lower, in other words, whether the vehicle 1 can be safely and securely guided with steering control while the vehicle 1 is guided from the current position in the traffic circle RA to the target stopping position S. For example, in a case in which the current position of the vehicle 1 is the position 1B in the traffic circle RA in the example illustrated in Figure 4, sudden steering is needed to exit from the closest exit E2 of the traffic circle RA as illustrated with an arrow P2. In this case, a lateral acceleration rate exceeding the predetermined lateral acceleration rate would occur, and accordingly, it is determined that the vehicle 1 at the position 1B cannot turn to exit through the exit E2 at the predetermined lateral acceleration rate or lower. However, in a case of exiting from the exit E3 or E4, there is sufficient distance from the vehicle 1 at the position 1B, and thus it is determined that sudden steering is unnecessary and the vehicle 1 can turn to exit through the exit E3 or E4 at the predetermined lateral acceleration rate or lower. In a case in which there are a plurality of exits that the vehicle 1 can turn at the predetermined lateral acceleration rate or lower, the priority rank of a target stopping position candidate T is set to be higher that is set just beyond an exit with a shorter distance from the current position of the vehicle 1 in the traffic circle RA.

Note that the RMF part 12 may additionally consider the deceleration rate of the vehicle 1 in the front-back direction when determining whether the vehicle 1 can turn to exit through an exit of the traffic circle RA at the predetermined lateral acceleration rate or lower. For example, in a case in which the RMF is activated when the vehicle 1 is at the position 1B in the traffic circle RA in the example illustrated in Figure 4, sudden deceleration is needed to exit from the closest exit E2 of the traffic circle RA at the predetermined lateral acceleration rate or lower. In this case, a mental or physical burden may be applied to the passengers of the vehicle 1. Thus, when the vehicle 1 exits the traffic circle RA while being guided to a target stopping position, the RMF part 12 may additionally determine whether the vehicle 1 can turn to exit through an exit of the traffic circle RA at a predetermined front-back deceleration rate (for example, 0.2 G approximately) or lower. In this manner, the RMF part 12 may set the priority ranks of the target stopping position candidates T, taking into consideration, for example, the vehicle speed, front-back deceleration rate, lateral speed, lateral acceleration rate of the vehicle 1, or the like. Accordingly, the vehicle 1 can be safely guided without sudden deceleration or sudden steering, and a burden on the passengers can be reduced.

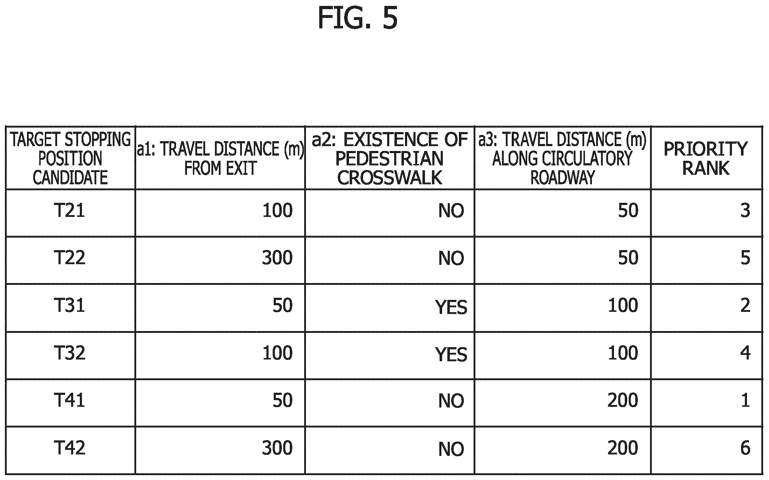

A specific example of the priority ranks set to the plurality of target stopping position candidates T will be described below with reference to Figure 5. Figure 5 lists conditions (a1), (a2), and (a3) and priority ranks related to the plurality of target stopping position candidates T21, T22, T31, T32, T41, and T42 in "A: Case in which the RMF is activated in the vicinity of the traffic circle RA". Note that the current position of the vehicle 1 is the position 1A before the entrance E1 of the traffic circle RA.

As for the target stopping position candidate T21 set on the road A2 connected to the exit E2, (a1) the travel distance from the exit E2 is 100 m, (a2) no pedestrian crosswalk is installed on the road A2 extending from the exit E2, and (a3) the travel distance from the entrance E1 to the exit E2 is 50 m. As for the target stopping position candidate T22 set on the road A2 connected to the exit E2, (a1) the travel distance from the exit E2 is 300 m, (a2) no pedestrian crosswalk is installed on the road A2 extending from the exit E2, and (a3) the travel distance from the entrance E1 to the exit E2 is 50 m.

As for the target stopping position candidate T31 set on the road A3 connected to the exit E3, (a1) the travel distance from the exit E3 is 50 m, (a2) the pedestrian crosswalk D3 is installed on the road A3 extending from the exit E3, and (a3) the travel distance from the entrance E1 to the exit E3 is 100 m. As for the target stopping position candidate T32 set on the road A3 connected to the exit E3, (a1) the travel distance from the exit E3 is 100 m, (a2) the pedestrian crosswalk D3 is installed on the road A3 extending from the exit E3, and (a3) the travel distance from the entrance E1 to the exit E3 is 100 m.

As for the target stopping position candidate T41 set on the road A4 connected to the exit E4, (a1) the travel distance from the exit E4 is 50 m, (a2) no pedestrian crosswalk is installed on the road A4 extending from the exit E4, and (a3) the travel distance from the entrance E1 to the exit E4 is 200 m. As for the target stopping position candidate T42 set on the road A4 connected to the exit E4, (a1) the travel distance from the exit E4 is 300 m, (a2) no pedestrian crosswalk is installed on the road A4 extending from the exit E4, and (a3) the travel distance from the entrance E1 to the exit E4 is 200 m.

Condition (a1), which has the highest priority for priority rank determination, is first considered. Since the travel distance from the exit E3 to the target stopping position candidate T31 set on the road A3 and the travel distance from the exit E4 to the target stopping position candidate T41 set on the road A4 are shortest at 50 m, the priority ranks of the target stopping position candidates T31 and T41 are higher than those of the other target stopping position candidates. Subsequently, condition (a2) is considered for the target stopping position candidates T31 and T41. The pedestrian crosswalk D3 is installed on the road A3 in which the target stopping position candidate T31 is set, but no pedestrian crosswalk is installed on the road A4 in which the target stopping position candidate T41 is set. Thus, the priority rank of the target stopping position candidate T41 is higher than that of the target stopping position candidate T31. As a result, the priority rank of the target stopping position candidate T41 is set to be the first place, and the priority rank of the target stopping position candidate T31 is set to be the second place.

Condition (a1) is considered for the remaining target stopping position candidates. The travel distance from the exit E2 to the target stopping position candidate T21 set on the road A2 and the travel distance from the exit E3 to the target stopping position candidate T32 set on the road A3 are short at 100 m, and the priority ranks of the target stopping position candidates are high. Subsequently, condition (a2) is considered for the target stopping position candidates T21 and T32. No pedestrian crosswalk is installed on the road A3 in which the target stopping position candidate T21 is set, but the pedestrian crosswalk D3 is installed on the road A3 in which the target stopping position candidate T32 is set. Thus, the priority rank of the target stopping position candidate T21 is higher than that of the target stopping position candidate T32. As a result, the priority rank of the target stopping position candidate T21 is set to be the third place, and the priority rank of the target stopping position candidate T32 is set to be the fourth place.

Condition (a1) is considered for the remaining target stopping position candidates. The travel distance from the exit E2 to the target stopping position candidate T22 set on the road A2 and the travel distance from the exit E4 to the target stopping position candidate T42 set on the road A4 are 300 m. Subsequently, condition (a2) is considered for the target stopping position candidates T22 and T42. No pedestrian crosswalk is installed on the road A3 in which the target stopping position candidate T22 is set nor on the road A4 in which the target stopping position candidate T42 is set. Thus, condition (a3) is further considered. The travel distance (distance on the circulatory roadway C) (50 m) from the entrance E1 to the exit E2 of the traffic circle RA for moving toward the target stopping position candidate T22 is shorter than the travel distance (200 m) from the entrance E1 to the exit E4 of the traffic circle RA for moving toward the target stopping position candidate T42. Accordingly, the priority rank of the target stopping position candidate T22 is set to be the fifth place, and the priority rank of the target stopping position candidate T42 is set to be the sixth place.

As described above, the RMF part 12 sets a priority rank to each of a plurality of target stopping position candidates T and selects, as the target stopping position S, the target stopping position candidate T with the highest priority rank from among the plurality of target stopping position candidates T. In the example illustrated in Figure 5, the target stopping position candidate T41 positioned outside the traffic circle RA and having the highest priority rank among the plurality of target stopping position candidates T21, T22, T31, T32, T41, and T42 is selected as the target stopping position S. As described above, the automated travel target path is a path that enters the road A3 from the exit E3 as illustrated with the arrow P3, and accordingly, the target stopping position S corresponding to the target stopping position candidate T41 set on the road A4 is positioned on a path illustrated with an arrow P4, which is different from the automated travel target path.

### RMF activation process during automated travel

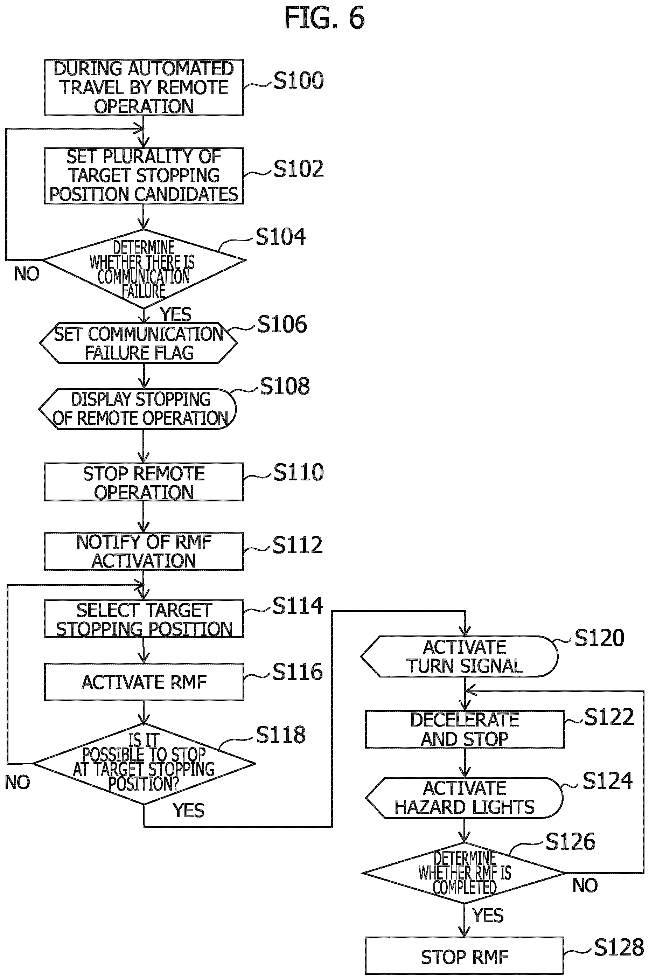

The process of RMF activation when remote monitoring and remote operation have become difficult during automated travel will be described below. Figure 6 illustrates a flowchart for description of the process of RMF activation according to the present embodiment. Note that the RMF part 12 is configured to regularly set a plurality of target stopping position candidates T in preparation for activation of the RMF irrespective of existence of the traffic circle RA on the target path, but the following describes a case in which the traffic circle RA exists on the front side of the vehicle 1 on the target path and the RMF is activated in the vicinity of or inside the traffic circle RA.

### (1) Activation of automated travel by remote monitoring and remote operation (step S100)

Automated travel by the autonomous operation device 10 is performed in response to a start command from the operator of the remote operation base station 25R. The autonomous operation device 10 performs travel control of the vehicle 1 in accordance with the generated target path and target vehicle speed.

### (2) Setting of a plurality of target stopping position candidates (step S102)

The RMF part 12 performs search for target stopping position candidates T based on the own-vehicle position information obtained by the positioning means 24 and the map information in the map information database 23 and sets a plurality of target stopping position candidates T on the global path to a destination in preparation for RMF activation. The RMF part 12 sets the plurality of target stopping position candidates T outside the traffic circle RA on the target path during automated travel, in other words, on a road connected to an exit of the traffic circle RA. The plurality of target stopping position candidates T are constantly updated, and the latest target stopping position candidates T are set based on the current position of the vehicle 1.

### (3) Communication failure determination (step S104)

During operation of the autonomous operation device 10 by remote monitoring and remote operation, the RMF part 12 constantly (for example, at predetermined intervals) determines whether communication with the remote operation base station 25R through the communication instrument 25 is normally performed and continuation of automated travel is possible. In a case in which it is determined that continuation of remote monitoring and remote operation of automated travel by the autonomous operation device 10 has become difficult due to a communication failure such as a failure of the communication instrument 25 or cutoff of communication with the remote operation base station 25R, the process proceeds to step S106 to activate the RMF. In a case in which no communication failure has occurred and continuation of automated travel by remote monitoring and remote operation is possible, the process returns to step S102 to continue automated travel.

### (4) Stop of remote monitoring and remote operation (steps S106 to S110)

In a case in which it is determined that continuation of automated travel by remote monitoring and remote operation has become difficult, a flag indicating communication failure is set (step S106), and simultaneously, the notification part 17 notifies the inside and outside of the vehicle that operation of the autonomous operation device 10 (that is, automated travel) by remote monitoring and remote operation is to be stopped (step S108) and operation of the autonomous operation device 10 by remote monitoring and remote operation is stopped (step S110).

### (5) Notification of RMF activation (step S112)

The notification part 17 notifies the driver and passengers of the vehicle 1 that the RMF is to be activated since continuation of remote monitoring and remote operation has become difficult. The notification part 17 may notify the outside of the vehicle.

### (6) Selection of target stopping position (step S 114)

The target stopping position S is selected from among the plurality of target stopping position candidates T. As described above, the RMF part 12 sets a priority rank to each of the plurality of target stopping position candidates T set at step S102, and selects a target stopping position candidate T with the highest priority rank as the target stopping position S. Accordingly, the target stopping position S positioned outside the traffic circle RA is selected when the RMF is activated in the vicinity of or inside the traffic circle RA. The path generating part 13 generates an RMF activation target path to the selected target stopping position S based on the own-vehicle position information acquired by the environmental condition estimating part 11, the map information, information related to the shape of the traffic circle RA, the positions and speeds of other vehicles, the motion state of the own vehicle, and the like.

### (7) RMF activation (step S116)

The vehicle 1 starts activation of the RMF to safely stop in a target stopping area. The RMF is a function to cause the vehicle 1 to independently travel to the target stopping position S along the RMF activation target path and decelerate and stop.

### (8) Determination of stop feasibility at the target stopping position S (step S118)

The RMF part 12 detects existence of any obstacle around the target stopping position S based on obstacle information around the target stopping position S, which is provided from the external sensors 21 through the environmental condition estimating part 11, and determines the feasibility of stop at the target stopping position S. In a case in which no obstacle exists around the target stopping position S, it is determined that stop is possible and the process proceeds to step S120.

For example, in a case in which another vehicle exists at the target stopping position S or work is performed near the target stopping position S, it is determined that the vehicle 1 cannot stop at the target stopping position S due to an obstacle around the target stopping position S. In this case, the process returns to step S114 to select a new target stopping position S. For example, a plurality of target stopping position candidates T are set on each of the roads A2, A3, and A4 as illustrated in Figure 4 so that, for example, in a situation in which the vehicle 1 cannot stop at the selected target stopping position S after having exited the traffic circle RA, a target stopping position candidate T set farther than the selected target stopping position S can be immediately determined as an alternative target stopping position S.

### (9) Deceleration and stop by RMF (steps S120 to S124)

The autonomous operation device 10 activates a direction indicator (not illustrated) in the direction of the target stopping position S (step S120). The vehicle control part 14 performs speed control and steering control so that the vehicle 1 travels along the RMF activation target path while being decelerated and stops at the target stopping position S (step S122). The autonomous operation device 10 flashes hazard lights (not illustrated) (step S124).

### (10) RMF completion determination (steps S126 to S128)

The RMF part 12 performs matching of a position at which the vehicle 1 has stopped and the target stopping position S based on the own-vehicle position information and the map information so as to determine whether the positions match. In a case in which the positions do not match, the process returns to step S122 for traveling to the target stopping position S. In a case in which the stopping position of the vehicle 1 and the target stopping position S match, it is determined RMF is completed and the process proceeds to step S128 to stop the RMF. Accordingly, the series of RMF processes end.

With the driving control apparatus for the vehicle 1 according to the present embodiment described above, it is possible to achieve operational effects as described below.

The driving control apparatus for the vehicle 1 including the autonomous operation device 10 for executing automated travel by remote monitoring and remote operation has a risk mitigation function (RMF) to execute risk mitigation control to stop the vehicle 1 at a target stopping position in a situation in which continuation of automated travel by remote monitoring and remote operation has become difficult. The autonomous operation device 10 is configured to execute search for target stopping position candidates T based on position information of the vehicle 1 and map information in preparation for activation of the RMF during automated travel, to set a plurality of target stopping position candidates T including a target stopping position candidate T on a path different from the automated travel target path, to set a target stopping position candidate T outside the traffic circle RA in a case in which the traffic circle RA exists on the target path, and to select the target stopping position S from among the plurality of target stopping position candidates T when the RMF is activated in the vicinity of or inside the traffic circle RA.

In a case in which the traffic circle RA exists on the automated travel target path, no target stopping position candidate T is set inside the traffic circle RA, and thus, when the RMF is activated in the vicinity of or inside the traffic circle RA, the target stopping position S positioned outside the traffic circle RA can be selected to guide and stop the vehicle 1 in a safe and secure area. The plurality of target stopping position candidates T can be set on a path different from the automated travel target path, and thus, irrespective of the automated travel target path, it is possible to prevent the vehicle 1 from stopping at a place at which the vehicle 1 may disturb passage of other traffic participants, and to reduce traveling of the vehicle 1 that may pose a risk of inducing contact and collision with other traffic participants. Moreover, since search for the plurality of target stopping position candidates T is executed during automated travel, the target stopping position S can be immediately selected when starting activation of the RMF in a situation in which continuation of automated travel by remote monitoring and remote operation has become difficult, for example, in a case in which a failure has occurred to communication with the remote operation base station 25R for remote monitoring and remote operation.

The plurality of target stopping position candidates T are set on a plurality of roads extending from exits of the traffic circle RA. Accordingly, irrespective of the automated travel target path, the target stopping position S, with which it is possible to reduce the risk of disruption of traffic flow and the risk of inducing contact with other traffic participants, can be selected from among the plurality of target stopping position candidates T.

The RMF part 12 sets a plurality of target stopping position candidates T on each of the plurality of roads extending from the exits of the traffic circle RA. Two or more target stopping position candidates T are set beyond each exit of the traffic circle RA. Accordingly, for example, in a case in which an obstacle exists at the selected target stopping position S and the vehicle 1 cannot be stopped, a target stopping position candidate T on the same road can be selected as the target stopping position S, and thus it is possible to immediately switch the target stopping position S and safely stop the vehicle 1.

The RMF part 12 is configured to set a priority rank for each of the plurality of target stopping position candidates T and to select a target stopping position candidate T with the highest priority rank as the target stopping position S from among the plurality of target stopping position candidates T. The priority rank is higher as the distance from an exit of the traffic circle RA to the target stopping position candidate T is shorter. Since the priority rank for selecting the target stopping position S is set to be higher as the distance from an exit of the traffic circle RA to the target stopping position candidate T is shorter, it is possible to shorten the distance that the vehicle 1 travels while the RMF is executed, thereby reducing the risk of contact with other traffic participants and the like.

The RMF part 12 sets the priority rank of a target stopping position candidate T, which is set on a road in which no pedestrian crosswalk is installed just beyond an exit of the traffic circle RA, to be higher than the priority rank of a target stopping position candidate T, which is set on a road in which a pedestrian crosswalk is installed just beyond an exit of the traffic circle RA. In a case in which a pedestrian crosswalk is installed, there is a probability that pedestrians are crossing the pedestrian crosswalk and there occurs a risk of contact and collision with the crossing pedestrians. In a case in which crossing pedestrians exist, a required time for arriving the target stopping position S increases because the vehicle 1 needs to be kept waiting until the crossing pedestrians cross the pedestrian crosswalk. Thus, the priority rank of a target stopping position candidate set on a road in which no pedestrian crosswalk is installed is set to be high so that the target stopping position candidate is likely to be selected as the target stopping position S, and accordingly, it is possible to avoid the risk of contact and collision with crossing pedestrians and eliminate the time for waiting crossing pedestrians, thereby safely guiding the vehicle 1 to the target stopping position S in a short time.

In a case in which the RMF is activated in the vicinity of the traffic circle RA, the RMF part 12 sets the priority rank of a target stopping position candidate T, which is set on a road extending from an exit of the traffic circle RA, to be higher as the distance from the entrance E1 of the traffic circle RA closest to the vehicle 1 to that exit is shorter. Accordingly, it is possible to shorten the distance that the vehicle 1 travels while the RMF is operated, thereby reducing the risk of contact and collision with other traffic participants.

In a case in which the RMF is activated in the traffic circle RA, the RMF part 12 sets the priority rank of a target stopping position candidate T, which is set beyond an exit among a plurality of exits from which the vehicle 1 can exit the traffic circle RA at a predetermined lateral acceleration rate or lower, to be higher as the distance from the vehicle 1 to that exit is shorter. It is possible to reduce a burden on the passengers of the vehicle 1 by selecting an exit for which no sudden steering is needed to move to the target stopping position S set outside the traffic circle RA. Moreover, in a case in which there are a plurality of exits for which no sudden steering is needed, a target stopping position candidate T set beyond an exit closest to the vehicle 1 is selected as the target stopping position S, and thus it is possible to shorten the distance that the vehicle 1 travels while the RMF is operated.

### Modifications

(1) In the above-described embodiment, a plurality of target stopping position candidates T are set on each of the plurality of roads A2 to A4 beyond the exits E2 to E4 of the traffic circle RA in preparation for activation of the RMF. However, the present invention is not limited thereto and a plurality of target stopping position candidates T do not need to be set on each of the plurality of roads. For example, on any of the plurality of roads of the traffic circle RA, only one target stopping position candidate T may be set or no target stopping position candidate T may be arranged. Moreover, in the example illustrated in Figure 4, two target stopping position candidates T are arranged on each of the roads A2 to A4, but the number of target stopping position candidates T arranged on each road is not limited to two, but may be three or four. In other words, the RMF part 12 may be configured to set a plurality of target stopping position candidates T for the traffic circle RA by setting one or more target stopping position candidates T on at least one of a plurality of roads extending from the exits of the traffic circle RA.
(2) The RMF part 12 may consider whether each target stopping position candidate T is set on the automated travel target path to select the target stopping position S from among the target stopping position candidates T. For example, the priority rank of a target stopping position candidate set on the target path may be set to be higher than the priority rank of a target stopping position candidate set on a path different from the target path. Accordingly, it is possible to reduce anxiety of the passengers of the vehicle 1 when the vehicle 1 is guided to a path different from the automated travel target path while the RMF is operated. A condition of whether a target stopping position candidate T is set on the automated travel target path may be used, for example, in addition to the above-described conditions (a1) to (a3) and conditions (b1) to (b3) or may be used, for example, in place of the above-described condition (a3) or condition (b3).
(3) In a case in which the RMF is activated in the vicinity of or inside the traffic circle RA, the path generating part 13 may generate the RMF activation target path so that the vehicle 1 travels along a side end (outer peripheral end) of the circulatory roadway C of the traffic circle RA. For example, in a case in which the circulatory roadway C of the traffic circle RA includes a plurality of lanes, the automated travel target path may be set so that the vehicle 1 travels in a lane closest to the central island B among the plurality of lanes of the circulatory roadway C. In such a case, when it is determined that the RMF is to be activated in the vicinity of or inside the traffic circle RA, the path generating part 13 changes the target path so that the vehicle 1 travels along the side end of the circulatory roadway C of the traffic circle RA.

In a case of traveling in the lane closest to the central island B (first lane from the inner periphery side) on the circulatory roadway C, the travel distance to an exit of the traffic circle RA may be shortened, but the vehicle may not be able to move to a target exit depending on, for example, the traveling situations of other vehicles traveling in an adjacent lane. Thus, the automated travel target path is changed to the RMF activation target path such that the vehicle 1 travels in a lane closest to the side end on the circulatory roadway C, and accordingly, it is possible to more safely guide the vehicle 1 to the target stopping position S.

Although the embodiments of the present invention are described above, the present invention is not limited to the above-described embodiments, and further various modifications and changes are possible within the scope of the present invention.

### [Reference Signs List]

- 1: Vehicle
- 10: Autonomous operation device
- 11: Environmental condition estimating part
- 12: RMF part
- 13: Path generating part
- 14: Vehicle control part
- 15: ACC controller
- 16: Automated steering controller
- 17: Notification part
- 21: External sensors
- 22: Internal sensors
- 23: Map information database
- 24: Positioning means (GNSS)
- 25: Communication instrument
- 31: EPS controller
- 32: Engine controller
- 33: ESP/ABS controller
- 34: Manual steering (steering wheel)
- 35: Manual operation (acceleration pedal)
- 36: Manual operation (brake pedal)

## Claims

1. A driving control apparatus for a vehicle including an autonomous operation device for executing automated travel by remote monitoring and remote operation,
the driving control apparatus having a risk mitigation function (RMF) to execute risk mitigation control to stop the vehicle at a target stopping position in a situation in which continuation of automated travel by remote monitoring and remote operation has become difficult,
wherein the autonomous operation device is configured to:
execute search for target stopping position candidates based on position information of the vehicle and map information in preparation for activation of the RMF during the automated travel;
set a plurality of target stopping position candidates including a target stopping position candidate on a path different from a target path of the automated travel, and, in a case in which a traffic circle exists on the target path, a target stopping position candidate being set outside the traffic circle, and
select a target stopping position from among the plurality of target stopping position candidates in a case in which the RMF is activated in a vicinity of or inside a traffic circle.

2. The driving control apparatus for the vehicle according to claim 1, wherein the plurality of target stopping position candidates are set on a plurality of roads extending from exits of the traffic circle.

3. The driving control apparatus for the vehicle according to claim 2, wherein a plurality of target stopping position candidates are set on each of the plurality of roads extending from the exits of the traffic circle.

4. The driving control apparatus for the vehicle according to claim 2, wherein:
the driving control apparatus is configured to set a priority rank for each of the plurality of target stopping position candidates and to select a target stopping position candidate with a highest priority rank as the target stopping position from among the plurality of target stopping position candidates; and
the priority rank of a target stopping position candidate is higher as a distance from a corresponding exit of the traffic circle to the target stopping position candidate is shorter.

5. The driving control apparatus for the vehicle according to claim 4, wherein the priority rank of a target stopping position candidate set on a road in which no pedestrian crosswalk is installed just beyond an exit of the traffic circle is higher than the priority rank of a target stopping position candidate set on a road in which a pedestrian crosswalk is installed just beyond an exit of the traffic circle.

6. The driving control apparatus for the vehicle according to claim 5, wherein in a case in which the RMF is activated in the vicinity of the traffic circle, the priority rank of a target stopping position candidate set on a road extending from an exit of the traffic circle is set to be higher as a distance from an entrance closest to the vehicle to the exit is shorter.

7. The driving control apparatus for the vehicle according to claim 5, wherein in a case in which the RMF is activated in the traffic circle, the priority rank of a target stopping position candidate, which is set beyond an exit among a plurality of exits from which the vehicle can exit the traffic circle at a predetermined lateral acceleration rate or lower, is set to be higher as a distance from the vehicle to the exit is shorter.

8. The driving control apparatus for the vehicle according to claim 5, wherein the priority rank of a target stopping position candidate on the target path is higher than the priority rank of a target stopping position candidate on a path different from the target path.

9. The driving control apparatus for the vehicle according to any one of claims 1 to 8, wherein in a case in which the RMF is activated in the vicinity of or inside a traffic circle, the target path is changed such that the vehicle travels along a side end of a circulatory roadway of the traffic circle.
